# EUROPÄISCHE PATENTSCHRIFT

(11) **EP 3 383 709 B1**
(45) Veröffentlichungstag und Bekanntmachung des Hinweises auf die Patenterteilung: **08.01.2020**
(21) Anmeldenummer: 16802107.9
(22) Anmeldetag: 30.11.2016
(51) Int. Cl.: B60R 16/02, B60R 16/027

(54) **KABELFÜHRUNGSEINRICHTUNG FÜR ANSCHLUSSKABEL EINES GASSACKMODULS, VERKABELUNG, GASSACKMODUL SOWIE LENKRAD ODER FAHRZEUG MIT EINER DERARTIGEN KABELFÜHRUNGSEINRICHTUNG**
CABLE CONDUIT DEVICE FOR CONNECTION CABLES OF AN AIRBAG MODULE, WIRING SYSTEM, AIRBAG MODULE, AND STEERING WHEEL OR VEHICLE COMPRISING A CABLE CONDUIT DEVICE OF SAID TYPE
SYSTÈME DE GUIDE-CÂBLE CONÇU POUR DES CÂBLES DE CONNEXION D'UN MODULE DE COUSSIN GONFLABLE, CÂBLAGE, MODULE DE COUSSIN GONFLABLE ET VOLANT OU VÉHICULE ÉQUIPÉ D'UN TEL SYSTÈME DE GUIDE-CÂBLE

(30) Priorität: 02.12.2015 DE 102015015450
(43) Veröffentlichungstag der Anmeldung: 10.10.2018
(73) Patentinhaber: TRW Automotive Safety Systems GmbH, 63743 Aschaffenburg (DE)
(72) Erfinder: BACHMANN, Stefan, 63872 Heimbuchenthal (DE); HELMSTETTER, Matthias, 63743 Aschaffenburg (DE); RUMPF, Dieter, 63322 Rödermark (DE); KNECHT, Alexandra, 35398 Giessen (DE)
(74) Vertreter: ZF TRW Patentabteilung
(86) Internationale Anmeldenummer: PCT/EP2016/079269
(87) Internationale Veröffentlichungsnummer: WO 2017/093313

(56) Entgegenhaltungen:
- EP-A1- 0 667 262
- EP-A1- 1 428 727
- EP-A1- 1 538 029
- WO-A1-97/20711
- WO-A1-2004/055845
- WO-A1-2015/131993
- DE-A1-102004 047 647
- DE-A1-102004 053 899
- DE-A1-102014 000 966
- DE-C1- 19 914 653

## Beschreibung

Die Erfindung betrifft eine Kabelführungseinrichtung für Anschlusskabel eines Gassackmoduls. Ferner befasst sich die Erfindung mit einer Verkabelung eines Gassackmoduls mit einer derartigen Kabelführungseinrichtung sowie mit einem Gassackmodul, einem Lenkrad und einem Fahrzeug, die jeweils eine derartige Kabelführungseinrichtung aufweisen.

Lenkradbaugruppen, die ein Lenkrad und ein Gassackmodul umfassen, werden meist bei externen Zulieferunternehmen hergestellt und erst bei der Endmontage eines Gesamtfahrzeugs beim Fahrzeughersteller mit dem Fahrzeug verbunden. Dazu wird die Lenkradbaugruppe auf eine Lenksäule aufgesetzt und an dieser fixiert. Gleichzeitig ist es erforderlich, zumindest das Gassackmodul, insbesondere den darin angeordneten Gasgenerator, mit dem elektrischen System des Fahrzeugs zu koppeln. Dazu weist das Fahrzeug an der Lenksäule üblicherweise eine Wickelfeder auf, die einen entsprechenden Kontaktanschluss umfasst. Im Lenkrad, insbesondere am Gassackmodul, verlaufen Kabel, die in einem Stecker enden, welcher vor der Montage des Lenkrads mit der Wickelfeder zu verbinden ist.

Die Verbindung des Kontaktsteckers mit der Wickelfeder erfolgt in der Praxis manuell, wobei auf eine korrekte Ausrichtung des Steckers zu achten ist. Die manuelle Verbindung birgt das Risiko, dass der dem Stecker nachgeordnete Kabelstrang, selbst wenn er entlang des Gassackmoduls in einem Kabelkanal geführt ist, verdrillt wird. Dies ist unerwünscht, da beispielsweise eine Signalübertragung im Kabelbaum des Fahrzeugs durch induktive Effekte gestört werden kann.

Die EP 1 428 727 A1 beschreibt eine Fahrzeugstruktur, die beispielsweise hinter einer Armaturentafel angeordnet ist und eine beifahrerseitige elektronische Steuereinheit mit fahrerseitigen Vorrichtungen wie einem Anzeigegerät oder einem Messgerät verbindet. Die Fahrzeugstruktur umfasst ein Gehäuse mit einem ersten Gehäuseabschnitt, der einen ersten Verbinder für die Kopplung mit den fahrerseitigen Vorrichtungen aufweist, einem zweiten Gehäuseabschnitt, in dem die elektronische Steuereinheit untergebracht ist, sowie einem länglichen, dritten Gehäuseabschnitt, der die ersten und zweiten Gehäuseabschnitte verbindet, wobei im dritten Abschnitt ein Kabelbaum untergebracht ist, der den ersten Verbinder mit der elektronischen Steuereinheit verbindet.

In der WO 97/20711 ist Verbindungssystem für ein Airbag-Aktivierungssystem offenbart, um ein erstes Bauteil und ein zweites Bauteil miteinander zu verbinden. Das Verbindungssystem umfasst einen Steckverbinder zur Kopplung mit dem ersten Bauteil, ein Kabel, das durch den Steckverbinder angeschlossen wird und sich aus einem Gehäuse des zweiten Bauteils erstreckt, sowie eine Zugentlastungshülse, die mit einem ersten Ende am Steckverbinder und mit einem zweiten Ende am zweiten Bauteil befestigt ist. Das Kabel erstreckt sich unter Ausbildung einer Welle in einem Durchgangskanal der Zugentlastungshülse, sodass bei einer auftretenden Zugkraft eine mechanische Beanspruchung des Kabels durch die Zugentlastungshülse verringert oder verhindert wird.

Die Erfindung stellt sich die Aufgabe, eine verbesserte Kabelführungseinrichtung für Anschlusskabel eines Gassackmoduls bereitzustellen, die eine korrekte und einfache Montage des Gassackmoduls oder eines Lenkrads am Fahrzeug ermöglicht. Ferner ist es Aufgabe der Erfindung, eine Verkabelung eines Gassackmoduls, ein Gassackmodul sowie ein Lenkrad oder Fahrzeug mit einer derartigen Kabelführungseinrichtung bereitzustellen.

Erfindungsgemäß wird diese Aufgabe im Hinblick auf die Kabelführungseinrichtung durch den Gegenstand des Patentanspruchs 1, im Hinblick auf die Verkabelung durch den Gegenstand des Patentanspruchs 7, im Hinblick auf das Gassackmodul durch den Gegenstand des Patentanspruchs 9 und im Hinblick auf das Lenkrad oder das Fahrzeug durch den Gegenstand des Patentanspruchs 11 gelöst.

Die Erfindung beruht auf dem Gedanken, eine Kabelführungseinrichtung für Anschlusskabel eines Gassackmoduls mit wenigstens einem Kabelkanal anzugeben, der Haltemittel für wenigstens ein Kabel aufweist. Die Kabelführungseinrichtung weist ferner wenigstens einen Kontaktstecker zur Verbindung mit einer Wickelfeder einer Lenksäule auf. Erfindungsgemäß ist der Kontaktstecker verdrehsicher an den Kabelkanal gekoppelt.

Gemäß einer bevorzugten Ausgestaltung der Erfindung wird/ist der Kabelkanal (bzw. dessen Verbindungsabschnitt) mit dem Kontaktstecker mittels eines mit dem Kabelkanal und mit dem Kontaktstecker jeweils dauerhaft adhäsiv koppelbaren Zwischenelement, insbesondere mit einem doppelseitigen Klebeband verbunden.

Durch die verdrehsichere Kopplung des Kontaktsteckers an den Kabelkanal wird erreicht, dass der Kontaktstecker korrekt ausgerichtet ist, so dass er bei der Fahrzeugmontage leicht mit der Wickelfeder verbunden werden kann. Die Lenkradmontage kann so sicher und effizient durchgeführt werden. Gleichzeitig wird ein unerwünschtes Verdrillen der Kabel bzw. Anschlusskabel, die sich durch den Kabelkanal erstrecken, vermieden.

Im Allgemeinen ist bei der Erfindung also ein Kabelkanal vorgesehen, der einen Verbindungsabschnitt aufweist, wobei der Verbindungsabschnitt zur verdrehsicheren Aufnahme eines Kontaktsteckers ausgebildet ist. Dabei kann der Verbindungsabschnitt mit dem Kabelkanal bzw. mit einem Führungsabschnitt des Kabelkanals einstückig ausgebildet sein. Im Rahmen der vorliegenden Anmeldung wird also sowohl die Kabelführungseinrichtung mit dem Kabelkanal und dem Kontaktstecker, als auch der Kabelkanal an sich offenbart und beansprucht, wobei der Kabelkanal einen Verbindungsabschnitt zur verdrehsicheren Fixierung eines Kontaktsteckers am Kabelkanal aufweist.

Insofern ist hinsichtlich der Kabelführungseinrichtung in einer bevorzugten Variante vorgesehen, dass der Kabelkanal einen Führungsabschnitt und einen Verbindungsabschnitt aufweist. Dabei kann der Kontaktstecker mit dem Verbindungsabschnitt gekoppelt oder koppelbar sein. Der Kontaktstecker kann insbesondere durch eine Rastverbindung oder Klemmverbindung mit dem Verbindungsabschnitt gekoppelt oder koppelbar sein.

Der Führungsabschnitt dient hauptsächlich der korrekten Kabelführung entlang des Gassackmoduls bzw. innerhalb einer Lenkradbaugruppe. Damit ist sichergestellt, dass die Kabel bei der Montage des Gassackmoduls keine Behinderung darstellen. Dazu kann der Führungsabschnitt ein im Wesentlichen U-förmiges Querschnittsprofil aufweisen, so dass eine Erstreckungsrichtung für die Kabel vorgegeben wird. Die Haltemittel, die die Kabel im Kabelkanal halten, sind vorzugsweise im Führungsabschnitt ausgebildet. Der Verbindungsabschnitt dient hingegen zur Kopplung des Kontaktsteckers an dem Kabelkanal. Dies kann beispielsweise durch eine Rastverbindung oder Klemmverbindung erfolgen, was die Montage der Kabelführungseinrichtung erleichtert.

Konkret kann der Kabelkanal, insbesondere der Verbindungsabschnitt, Schnapphaken oder Klipsverbinder zur Verbindung mit dem Kontaktstecker aufweisen. Am Kontaktstecker können entsprechende Rastausnehmungen vorgesehen sein, in welche die Schnapphaken oder Klipsverbinder eingreifen, um den Kontaktstecker am Kabelkanal zu fixieren. Die Schnapphaken oder Klipsverbinder können einstückig mit dem Kabelkanal bzw. dem Verbindungsabschnitt ausgebildet sein.

Insbesondere kann der Verbindungsabschnitt eine Bodenplatte aufweisen, an der die Schnapphaken oder Klipsverbinder angeordnet sind. Die Schnapphaken oder Klipsverbinder sind vorzugsweise so an der Bodenplatte positioniert, dass sie den Kontaktstecker in einem gekoppelten Zustand seitlich umgreifen. Insgesamt kann die Bodenplatte eine Breite aufweisen, die größer als die Breite des Kontaktsteckers ist, wobei an den Rändern der Bodenplatte die Schnapphaken oder Klipsverbinder angeordnet sind. Die Klipsverbinder umgreifen den Kontaktstecker, um diesen verdrehsicher an der Bodenplatte zu fixieren. Dies stellt eine einfache Möglichkeit dar, um eine Verbindung zwischen dem Kabelkanal und einem bestehenden Kontaktstecker herzustellen. Bisher bekannte Kontaktstecker können auf diese Weise an den Kabelkanal angebunden werden, ohne konstruktive Veränderungen am Kontaktstecker selbst durchführen zu müssen.

Bei einer erfindungsgemäßen Kabelführungseinrichtung erstreckt sich der Kabelkanal, insbesondere ein Verbindungsabschnitt des Kabelkanals, durch den Kontaktstecker. Die Kopplung des Kontaktsteckers am Kabelkanal erfolgt dabei durch die formschlüssige Aufnahme des Verbindungsabschnitts im Kontaktstecker. So kann die Anordnung von Schnappverbindern oder Klipsverbindern am Kabelkanal vermieden werden.

Erfindungsgemäß weist der Kontaktstecker einen Steckerdeckel und einen Steckerkörper auf, wobei der Kabelkanal, insbesondere der Verbindungsabschnitt des Kabelkanals, zwischen dem Steckerdeckel und dem Steckerkörper, insbesondere klemmend, angeordnet ist. Die Kopplung bzw. Befestigung des Kontaktsteckers am Kabelkanal erfolgt also durch einen zweiteiligen Aufbau des Kontaktsteckers. Dabei ist zwischen dem Steckerdeckel und dem Steckerkörper ein Freiraum vorgesehen, durch den sich der Kabelkanal bzw. dessen Verbindungsabschnitt erstrecken kann.

Der Steckerdeckel kann zudem so angepasst sein, dass der Steckerdeckel zusammen mit dem Steckerkörper eine Klemmkraft auf den Verbindungsabschnitt ausübt. Beispielsweise können am Steckerdeckel Klemmfederelemente vorgesehen sein, die eine Klemmkraft auf den Kabelkanal ausüben. Im Allgemeinen wird durch die Zweiteilung des Kontaktsteckers mit einem Steckerdeckel und einem Steckerkörper vorteilhaft erreicht, dass die Kabel einfach in den Kontaktstecker eingeführt werden können. Der Kontaktstecker wird vorzugsweise erst dann mit dem Steckerdeckel verschlossen, wenn zuvor der Verbindungsabschnitt des Kabelkanals zwischen dem Steckerkörper und dem Steckerdeckel angeordnet wird. Somit kann beim Verschließen des Kontaktsteckers gleichzeitig die Kopplung an den Kabelkanal hergestellt werden.

Vorteilhaft ist es auch, wenn der Kabelkanal, insbesondere der Verbindungsabschnitt, eine Bodenplatte mit einer Breite aufweist, die kleiner als die Breite des Kontaktsteckers, insbesondere des Steckerdeckels und/oder des Steckerkörpers ist. Dies erleichtert die Durchführung des Kabelkanals durch den Kontaktstecker.

Im Allgemeinen kann vorgesehen sein, dass der Kontaktstecker und/oder der Verbindungsabschnitt an einem Längsende oder zwischen Längsenden des Kabelkanals angeordnet ist. Mit anderen Worten kann der Verbindungsabschnitt des Kabelkanals an einem Längsende des Kabelkanals angeordnet sein, so dass vom Verbindungsabschnitt ein einziger Führungsabschnitt ausgeht. Alternativ kann der Verbindungsabschnitt zwischen zwei Führungsabschnitten angeordnet sein. Dabei kann ein erster Führungsabschnitt insbesondere zur Führung von Anschlusskabeln eines Gassackmoduls und ein zweiter Führungsabschnitt zur Führung von Anschlusskabeln eines Lenkrads genutzt werden.

Jedenfalls ist bei einer bevorzugten Variante der Erfindung vorgesehen, dass der Kabelkanal einstückig ausgebildet ist. Insbesondere kann der Kabelkanal als Kunststoff-Spritzgussteil ausgebildet sein. Der Kabelkanal ist auf diese Weise einfach und kostengünstig herstellbar.

Ein nebengeordneter Aspekt der Erfindung betrifft eine Verkabelung eines Gassackmoduls mit einer zuvor beschriebenen Kabelführungseinrichtung. Die Verkabelung umfasst ferner ein oder mehrere elektrisch leitende Kabel, die in der Kabelführungseinrichtung angeordnet, insbesondere durch die Haltemittel formschlüssig in der Kabelführungseinrichtung fixiert, sind. Die Haltemittel fixieren die Kabel vorzugsweise im Führungsabschnitt des Kabelkanals der Kabelführungseinrichtung. Dabei können die Haltemittel als Vorsprünge ausgebildet sein, die von Seitenwänden des Kabelkanals ausgehen. Insbesondere können sich die Haltemittel parallel zu einem Kanalboden des Kabelkanals erstrecken und so ein Herausgleiten der Kabel aus dem Kabelkanal verhindern.

Die in der Kabelführungseinrichtung angeordneten Kabel können Modulverbindungskabel sein. Als Modulverbindungskabel werden im Rahmen der Anmeldung Kabel bzw. Anschlusskabel bezeichnet, die zwischen dem Gassackmodul und dem Kontaktstecker verlaufen bzw. das Gassackmodul mit der Wickelfeder elektrisch verbinden. Die Modulverbindungskabel umfassen insbesondere wenigstens ein Auslösekabel für wenigstens einen pyrotechnischen Aktuator. Der pyrotechnische Aktuator kann ein Gasgenerator für einen Gassack des Gassackmoduls sein. Ferner kann ein pyrotechnischer Aktuator vorgesehen sein, der zum Durchschneiden eines Fangbands des Gassacks Verwendung findet. Alternativ oder zusätzlich können die Modulverbindungskabel wenigstens ein Hupenkontaktkabel aufweisen.

Die in der Kabelführungseinrichtung angeordneten Kabel können auch Lenkradverbindungskabel sein. Als Lenkradverbindungskabel werden im Rahmen der vorliegenden Anmeldung Kabel verstanden, die sich zwischen dem Lenkrad und dem Kontaktstecker erstrecken bzw. den Kontaktstecker elektrisch mit dem Lenkrad verbinden. Die Lenkradverbindungskabel können insbesondere wenigstens ein Multifunktionsschalterkabel und/oder wenigstens ein Beleuchtungskabel umfassen. Häufig weisen Lenkräder Multifunktionstasten zur Bedienung unterschiedlicher Fahrzeugfunktionen auf. Diese werden mittels der Multifunktionsschalterkabel mit der Fahrzeugelektrik bzw. Fahrzeugelektronik verbunden. Insbesondere die Multifunktionstasten sind in vielen Fällen hinterleuchtet, so dass im Lenkrad außerdem eine Beleuchtungseinrichtung vorgesehen ist, welche durch die Beleuchtungskabel mit dem Kontaktstecker verbindbar ist.

In einer bevorzugten Variante der erfindungsgemäßen Verkabelung enden die Lenkradverbindungskabel in dem Kontaktstecker. Alternativ können die Lenkradverbindungskabel in einem separaten Lenkradverbindungsstecker enden. Wenn ein separater Lenkradverbindungsstecker oder ein sonstiger, weiterer Stecker vorgesehen ist, kann der Kabelkanal der Kabelführungseinrichtung zwei Verbindungsabschnitte aufweisen, wobei ein erster Verbindungsabschnitt mit dem Kontaktstecker zur Verbindung mit der Wickelwelle drehfest koppelbar ist und ein zweiter Verbindungsabschnitt den Lenkradverbindungsstecker oder den weiteren Stecker fixieren kann. Dies führt zu einer Erleichterung der Montage des Gesamtfahrzeugs, da lediglich der Kontaktstecker mit dem Kabelbaum des Fahrzeugs zu verbinden ist, um alle Funktionen der Lenkradbaugruppe (Lenkrad und Gassackmodul) mit der Fahrzeugelektrik bzw. -elektronik zu koppeln.

Zwischen dem ersten Verbindungsabschnitt und dem zweiten Verbindungsabschnitt kann sich ein Führungsabschnitt des Kabelkanals erstrecken. Konkret kann der Lenkradverbindungsstecker oder der weitere Stecker durch einen Führungsabschnitt des Kabelkanals mit dem Kontaktstecker verbunden sein. So ist eine geordnete Kabelführung zwischen dem Lenkradverbindungsstecker oder dem weiteren Stecker und dem Kontaktstecker realisiert.

Ein weiterer nebengeordneter Aspekt der Erfindung betrifft ein Gassackmodul mit einer zuvor beschriebenen Kabelführungseinrichtung und/oder der zuvor beschriebenen Verkabelung. Dabei kann in einer bevorzugten Variante vorgesehen sein, dass die Kabelführungseinrichtung alle Anschlusskabel des Gassackmoduls und des Lenkrads bündelt. So ist sichergestellt, dass am Gassackmodul, insbesondere an der gesamten Lenkerbaugruppe, kein Anschlusskabel lose vorliegt und ggfs. bei der Montage am Fahrzeug hinderlich ist. Es ist jedoch auch möglich, dass die Kabelführungseinrichtung nur einen ersten Teil der Anschlusskabel des Gassackmoduls und des Lenkrads bündelt, wobei ein zweiter Teil der Anschlusskabel lose angeordnet oder in einer separaten Kabelführung gebündelt ist. Mit anderen Worten kann in einer Variante am Gassackmodul nur eine einzige Kabelführungseinrichtung vorgesehen sein. Die einzige Kabelführungseinrichtung ist vorzugsweise einteilig ausgebildet. Alternativ kann die Kabelführungseinrichtung ein Zusatzelement bilden, das zusätzlich zu einer separaten Kabelführung am Gassackmodul angeordnet ist.

Im Rahmen der vorliegenden Anmeldung wird außerdem ein Lenkrad oder ein Fahrzeug mit einer zuvor beschriebenen Kabelführungseinrichtung und/oder einer zuvor beschriebenen Verkabelung und/oder einem zuvor beschriebenen Gassackmodul offenbart und beansprucht.

Die Erfindung wird im Folgenden anhand von Ausführungsbeispielen unter Bezugnahme auf die beigefügten, schematischen Zeichnungen näher erläutert. Darin zeigen:
Fig. 1: eine Vorderansicht auf eine Kabelführungseinrichtung, wobei der Kabelkanal einen einzigen Führungsabschnitt aufweist;
Fig. 2: eine Rückansicht der Kabelführungseinrichtung gemäß Fig. 1;
Fig. 3 und 4:jeweils eine perspektivische Ansicht des Kabelkanals der Kabelführungseinrichtung gemäß Fig. 1;
Fig. 5: eine Draufsicht auf einen Kabelkanal einer Kabelführungseinrichtung nach einem weiteren Ausführungsbeispiel, wobei der Verbindungsabschnitt Schnapphaken zum Umgreifen eines Kontaktsteckers aufweist;
Fig. 6: eine perspektivische Ansicht der Kabelführungseinrichtung mit dem Kabelkanal gemäß Fig. 5;
Fig. 7: eine Schnittansicht durch die Kabelführungseinrichtung gemäß Fig. 6 im Bereich des Kontaktsteckers;
Fig. 8: eine Draufsicht auf einen Kabelkanal einer erfindungsgemäßen Kabelführungseinrichtung gemäß einem bevorzugten Ausführungsbeispiel, wobei der Verbindungsabschnitt zur Positionierung zwischen einem Steckerkörper und einem Steckerdeckel des Kontaktsteckers ausgebildet ist;
Fig. 9: eine Draufsicht auf die Kabelführungseinrichtung mit dem Kabelkanal gemäß Fig. 8;
Fig. 10: eine perspektivische Schnittdarstellung durch die Kabelführungseinrichtung gemäß Fig. 9; und
Fig. 11: eine Schnittansicht durch die Kabelführungseinrichtung gemäß Fig. 10 im Bereich des Kontaktsteckers.

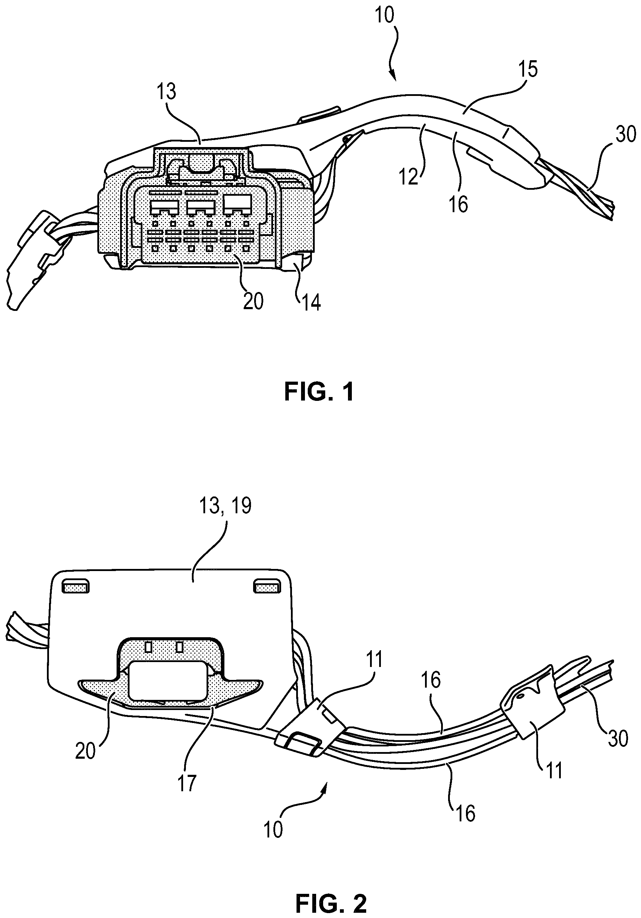

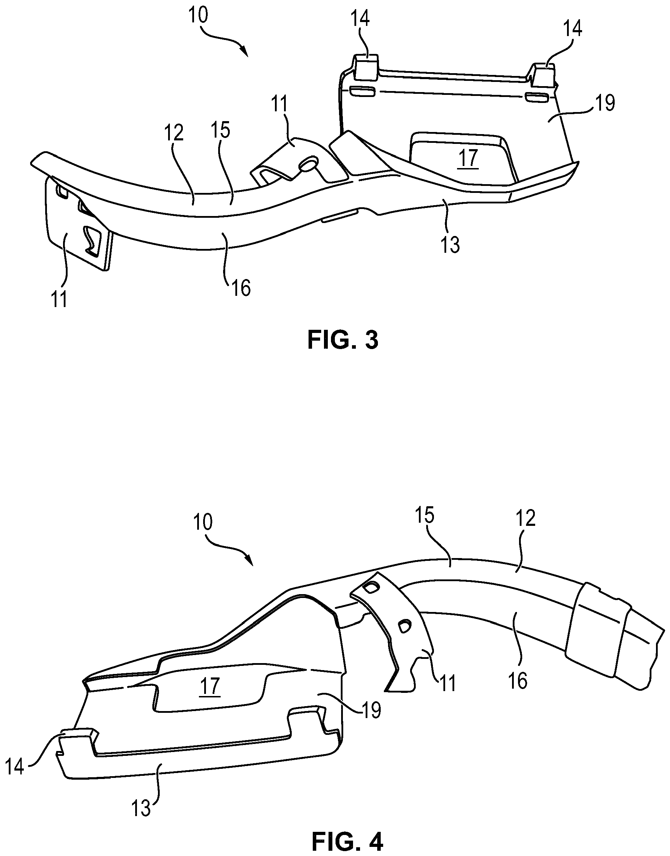

In den Figuren 1 und 2 ist eine Kabelführungseinrichtung für Anschlusskabel eines Gassackmoduls gezeigt, die einen Kabelkanal 10 und einen Kontaktstecker 20 umfasst. Die Figuren 3 und 4 zeigen den Kabelkanal 10 ohne den Kontaktstecker 20.

Der Kabelkanal 10 umfasst einen Führungsabschnitt 12 und einen Verbindungsabschnitt 13. Der Führungsabschnitt 12 dient zur Führung von Kabeln 30 entlang einer vorgegebenen Führungsbahn. Dazu umschließt der Führungsabschnitt 12 die Kabel 30 zumindest teilweise. Insbesondere weist der Führungsabschnitt 12 ein U-förmiges Querschnittsprofil auf, in welchem die Kabel 30 angeordnet werden. Der Führungsabschnitt 12 umfasst konkret ein Kanalboden 15 und zwei Seitenwände 16, die im Wesentlichen senkrecht zum Kanalboden 15 und parallel zueinander angeordnet sind. Ferner sind im Führungsabschnitt 12 Haltemittel 11 des Kabelkanals 10 vorgesehen, die ein Herausrutschen der Kabel 30 aus dem Führungsabschnitt 12 verhindern. Die Haltemittel 11 sind bei dem Ausführungsbeispiel gemäß Figuren 1 bis 4 als Laschen ausgebildet, die gelenkig mit dem Kabelkanal 10, insbesondere dem Kanalboden 15 verbunden sind und sich in einem geschlossenen Zustand über den Führungsabschnitt 12, insbesondere über die Seitenwände 16 erstrecken.

An dem Führungsabschnitt 12 schließt sich in einstückiger Weise ein Verbindungsabschnitt 13 an. Der Verbindungsabschnitt 13 umfasst eine Bodenplatte 19, die im Wesentlichen parallel zum Kanalboden 15 ausgerichtet ist. Die Bodenplatte 19 trägt Schnapphaken 14, die einstückig mit der Bodenplatte 19 ausgebildet sind. Die Schnapphaken 14 sind an den Rändern der Bodenplatte 19 angeordnet und erstrecken sich insbesondere senkrecht zur Bodenplatte 19. Die Bodenplatte 19 ist so dimensioniert, dass sie eine Aufnahme für den Kontaktstecker 20 bildet. Insbesondere ist die Breite der Bodenplatte 19 größer als die Breite des Kontaktsteckers 20, so dass die Schnapphaken 14 den Kontaktstecker 20 seitlich umgreifen können. Die Schnapphaken 14 rasten dabei in entsprechende Vertiefungen am Kontaktstecker 20 ein, um den Kontaktstecker 20 verdrehsicher am Kabelkanal 10 zu fixieren. Konkret ist vorgesehen, dass der Verbindungsabschnitt 13 des Kabelkanals 10 eine Kontur aufweist, die im Wesentlichen der Außenkontur des Kontaktsteckers 20 entspricht.

In den Figuren 2 und 3 ist erkennbar, dass in der Bodenplatte 19 eine Ausnehmung 17 angeordnet ist. Durch die Ausnehmung 17 können sich Abschnitte oder Zusatzbauteile des Kontaktsteckers 20 erstrecken, die über eine Rückwand bzw. einen Steckerdeckel 22 des Kontaktsteckers 20 hervorragen. Die Ausnehmung 17 ermöglicht auch den Zugriff auf im Kontaktstecker 20 angeordnete Bauteile, beispielsweise eine Batterie, eine elektrische Sicherung oder ein Relais.

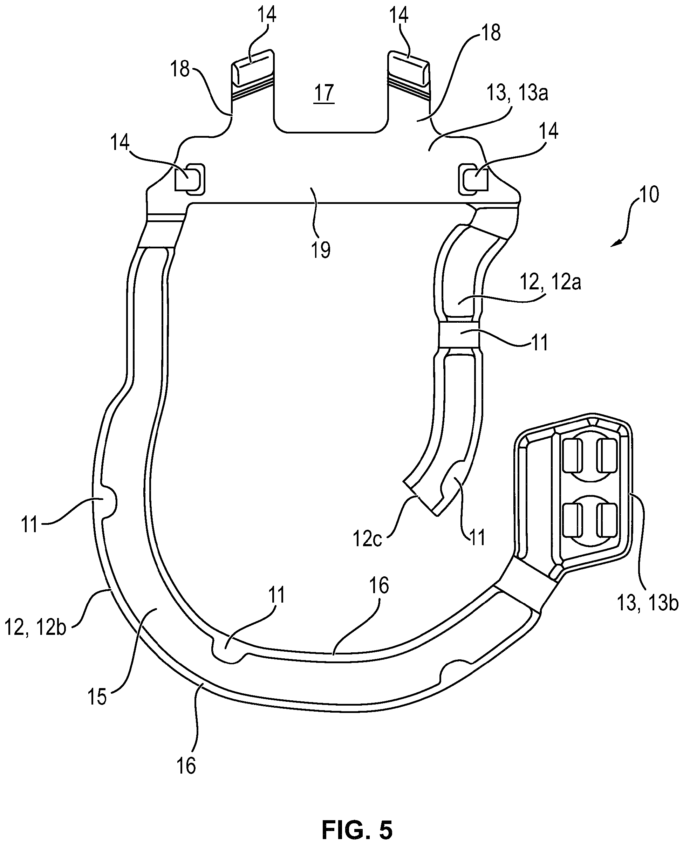

Bei dem Ausführungsbeispiel gemäß Figuren 1 bis 4 weist der Kabelkanal 10 einen einzigen Verbindungsabschnitt 13 auf, der sich an einem Längsende des einzigen Führungsabschnitts 12 anschließt. Mit anderen Worten ist der Verbindungsabschnitt 13 an einem Längsende des Kabelkanals 10 angeordnet. Andere Gestaltungen des Kabelkanals 10 sind möglich. So kann der Verbindungsabschnitt 13 beispielsweise in der Mitte des Kabelkanals 10, insbesondere zwischen zwei Führungsabschnitten 12 angeordnet sein. Ein derartiges Ausführungsbeispiel ist in den Figuren 5 bis 7 gezeigt.

In Fig. 5 ist ein Kabelkanal 10 dargestellt, der zwei Führungsabschnitte 12 aufweist. Zwischen den Führungsabschnitten 12 ist ein erster Verbindungsabschnitt 13a angeordnet. Dabei ist ein erster Führungsabschnitt 12a vorgesehen, der einerseits mit dem ersten Verbindungsabschnitt 13a einstückig verbunden ist und andererseits ein freies Ende 12c aufweist. Ein zweiter Führungsabschnitt 12b erstreckt sich zwischen dem ersten Verbindungsabschnitt 13a und einem zweiten Verbindungsabschnitt 13b. Der zweite Verbindungsabschnitt 13b ist an einem Längsende des Kabelkanals 10 angeordnet, wogegen der erste Verbindungsabschnitt 13a zwischen dem ersten Führungsabschnitt 12a und dem zweiten Führungsabschnitt 12b positioniert ist. Die Führungsabschnitte 12a, 12b weisen jeweils Haltemittel 11 auf, die als Vorsprünge der Seitenwände 16 ausgebildet sind. Die Vorsprünge der Seitenwände 16 erstrecken sich im Wesentlichen parallel zum Kanalboden 15 und bilden somit eine formschlüssige Halterung für Kabel 30. Insofern ist auch bei dem Ausführungsbeispiel gemäß Figuren 5 bis 7 vorgesehen, dass die Führungsabschnitte 12 jeweils ein U-förmiges Querschnittsprofil aufweisen.

Der erste Verbindungsabschnitt 13a dient zur Aufnahme des Kontaktsteckers 20. Dabei weist der erste Verbindungsabschnitt 13a eine Bodenplatte 19 auf, die Schnapphaken 14 trägt. Im Unterschied zu dem Ausführungsbeispiel gemäß Figuren 1 bis 4 weist die Bodenplatte 19 eine nach außen offene Ausnehmung 17 auf, die durch zwei Plattenfortsätze 18 begrenzt ist. Die Plattenfortsätze 18 münden in Schnapphaken 14, die im Wesentlichen senkrecht zur Bodenplatte 19 ausgerichtet sind. Die Plattenfortsätze 18 erstrecken sich in der Ebene der Bodenplatte 19. Insgesamt sind vier Schnapphaken 14 vorgesehen, die so ausgerichtet und voneinander beabstandet angeordnet sind, dass sie die Seitenwände des Kontaktsteckers 20 umgreifen und den Kontaktstecker formschlüssig am ersten Verbindungsabschnitt 13a, insbesondere am Kabelkanal 10, fixieren.

Der zweite Verbindungsabschnitt 13b ist an einem Längsende des Kabelkanals 10, insbesondere an einem Längsende des zweiten Führungsabschnitts 12b angeordnet und dient zur Aufnahme eines weiteren Steckers, der insbesondere zur Verbindung von Kabeln mit dem Lenkrad genutzt werden kann.

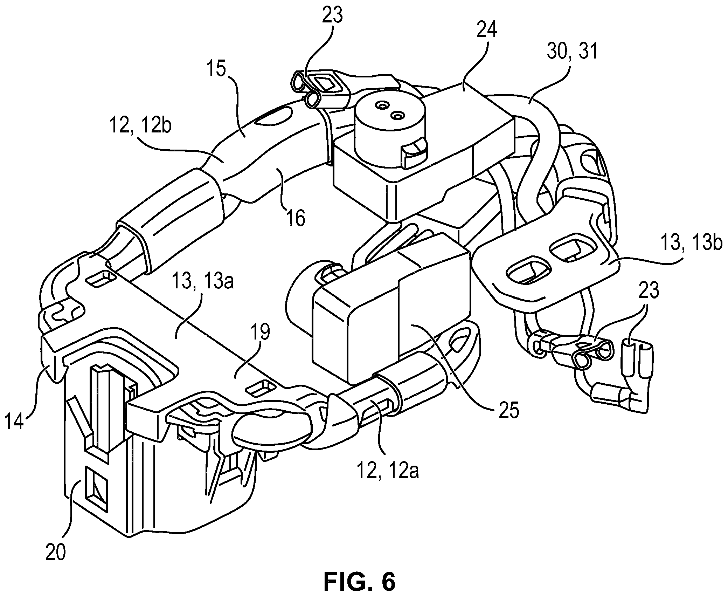

In Fig. 6 ist die Kabelführungseinrichtung mit dem Kabelkanal 10 aus Fig. 5 gezeigt. Dabei ist im ersten Verbindungsabschnitt 13a der Kontaktstecker 20 angeordnet, der zur Kopplung der Kabelführungseinrichtung mit einer Wickelfeder an einer Lenksäule genutzt wird. In den Führungsabschnitten 12 verlaufen mehrere Kabel 30, wobei Modulverbindungskabel 31 vorgesehen sind, die eine elektrische Verbindung zwischen dem Kontaktstecker 20 und einem Gassackmodul herstellen. Die Modulverbindungskabel 31 verlaufen insbesondere zu Steckverbindern, die mit dem Gassackmodul verbunden werden können. In Fig. 6 sind insbesondere ein Gasgeneratorstecker 24, ein TAU-Stecker 25 sowie Hupenkontaktstecker 23 gezeigt. Der Gasgeneratorstecker 24 dient zur elektrischen Kontaktierung eines Gasgenerators, der zum Entfalten eines Gassacks eine pyrotechnische Ladung trägt. Der TAU-Stecker 25 ermöglicht die elektrische Kontaktierung einer Tether Activation Unit (TAU), die beispielsweise zum Durchtrennen eines Fangbandes für den Gassack eingesetzt wird. Die Hupenkontaktstecker 23 sind mit Hupenkontakten am Gassackmodul verbindbar. Ferner kann wenigstens ein Hupenkontaktstecker 23 vorgesehen sein, der mit einem Hupenkontakt am Lenkrad verbindbar ist.

Im Allgemeinen können in den Führungsabschnitten 12 des Kabelkanals 10 auch Lenkradverbindungskabel 32 angeordnet sein. Bei dem hier dargestellten Ausführungsbeispiel erstrecken sich die Lenkradverbindungskabel 32 insbesondere durch den ersten Führungsabschnitt 12a und enden in einem Multifunktionsstecker 26. Der Multifunktionsstecker bildet eine elektrische Anschlussmöglichkeit für Multifunktionstasten an dem Lenkrad.

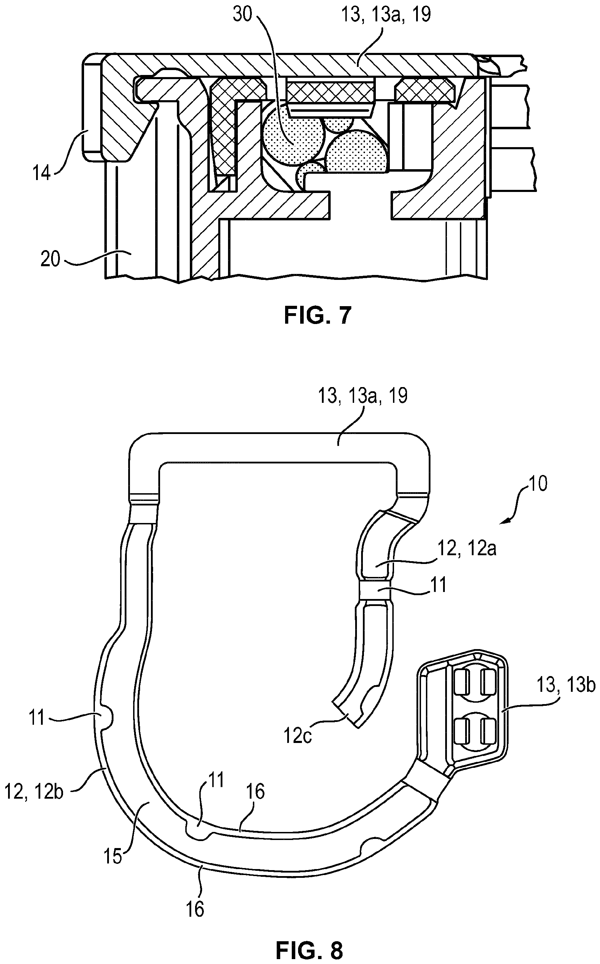

In der Querschnittsansicht gemäß Fig. 7 ist gut erkennbar, wie die Schnapphaken 14 am ersten Verbindungsabschnitt 13a den Kontaktstecker 20 seitlich umgreifen und so an der Bodenplatte 19 fixieren. Ferner ist gut erkennbar, dass die Schnapphaken 14 am Rand der Bodenplatte 19 angeordnet sind. Die Schnapphaken 14 sind insbesondere mit der Bodenplatte 19 einstückig ausgebildet.

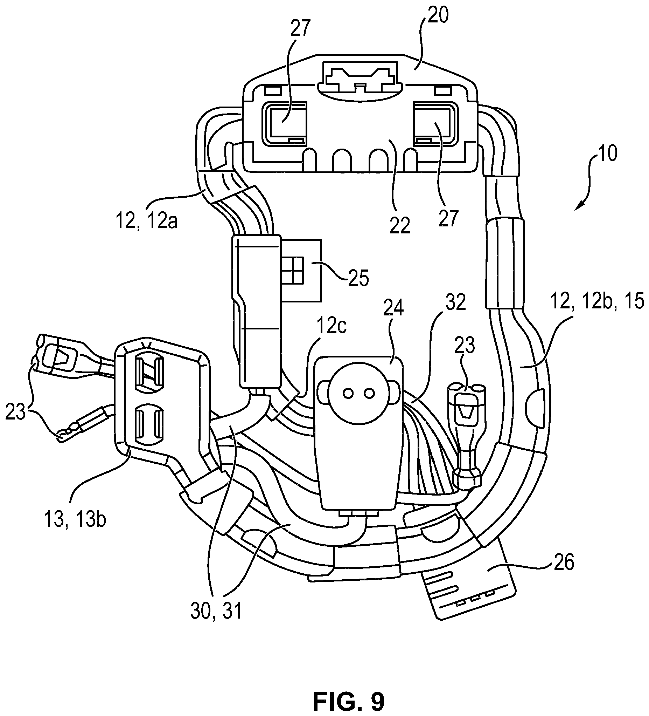

In den Figuren 8 bis 11 ist eine weitere Variante einer Kabelführungseinrichtung gezeigt, wobei Fig. 8 den Kabelkanal 10 der Kabelführungseinrichtung in einer Draufsicht darstellt. Im Wesentlichen ist die Kabelführungseinrichtung bzw. der Kabelkanal 10 ähnlich dem Ausführungsbeispiel gemäß Figuren 5-7 ausgebildet. Insbesondere weist der Kabelkanal 10 zwei Führungsabschnitte 12a, 12b auf, die durch einen ersten Verbindungsabschnitt 13a miteinander verbunden sind. An einem Längsende des zweiten Führungsabschnitts 12b ist ein zweiter Verbindungsabschnitt 13b angeordnet, der einen weiteren Stecker zur Verbindung mit dem Lenkrad tragen kann. Die Form der Führungsabschnitte 12a, 12b ist ebenfalls analog zu dem Ausführungsbeispiel gemäß Figuren 5 bis 7 gestaltet. Insbesondere weist der zweite Führungsabschnitt 12b im Wesentlichen eine Hakenform bzw. eine J-Form auf, um die Kabel 30 um einen Gasgenerator des Gassackmoduls zu führen. Der erste Führungsabschnitt 12a ist im Wesentlichen S-förmig gekrümmt.

Das Ausführungsbeispiel gemäß Figuren 8 bis 11 unterscheidet sich von dem Ausführungsbeispiel gemäß Figuren 5 bis 7 im Wesentlichen durch die Form des ersten Verbindungsabschnitts 13a. Bei dem Ausführungsbeispiel gemäß Figuren 8 bis 11 ist der erste Verbindungsabschnitt 13a durch eine Bodenplatte 19 gebildet, deren Breite kleiner als die Breite des Kontaktsteckers 20 ist. Die Bodenplatte 19 bzw. der Verbindungsabschnitt 13a ist im Wesentlichen balkenförmig ausgebildet und weist eine gerade Erstreckung auf.

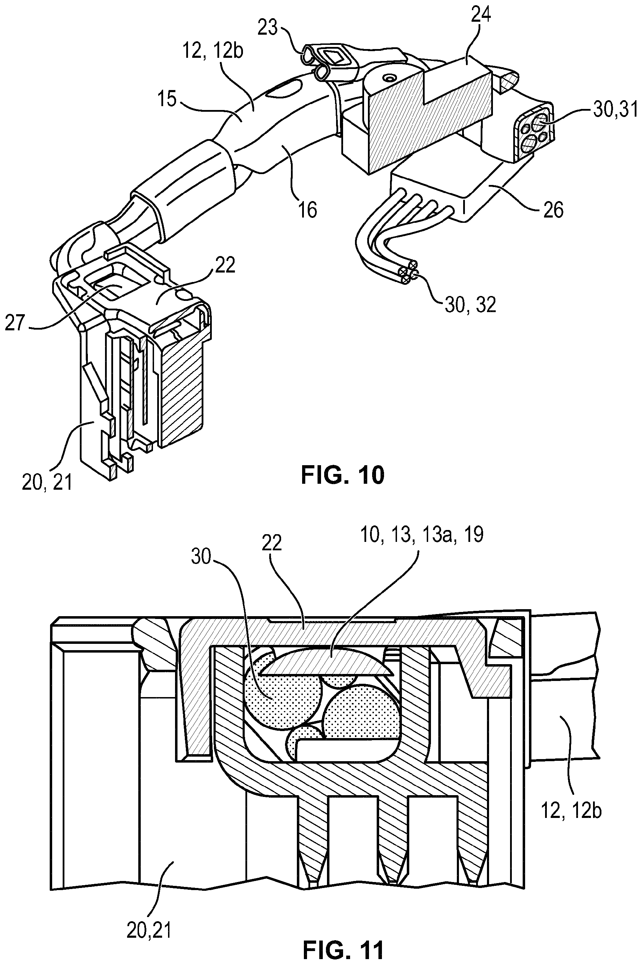

Die Kopplung des Kontaktsteckers 20 an den Kabelkanal 10 erfolgt durch eine Zweiteilung des Kontaktsteckers 20. Insbesondere ist der Kontaktstecker 20 durch einen Steckerkörper 21 gebildet, der durch einen Steckerdeckel 22 verschlossen ist. Der Steckerdeckel 22 bildet somit eine Rückwand des Kontaktsteckers 20. Dabei ist zwischen dem Steckerkörper 21 und dem Steckerdeckel 22 ein Freiraum vorgesehen, durch den sich der erste Verbindungsabschnitt 13 des Kabelkanals 10 erstreckt. Der erste Verbindungsabschnitt 13 des Kabelkanals 10 wird so formschlüssig von dem Kontaktstecker 20 umschlossen. Dies ist gut in Fig. 11 erkennbar. Der Steckerdeckel 22 weist vorzugsweise Klemmfederelemente 27 auf, die eine Klemmkraft auf den Kabelkanal 10 bzw. den ersten Verbindungsabschnitt 13a aufbringen. Auf diese Weise kann der Kabelkanal 10 klemmend mit dem Kontaktstecker 20 gekoppelt werden.

Die Ausführungsbeispiele gemäß Figuren 5 bis 11 mit dem zweiten Verbindungsabschnitt 13b, der einen weiteren Stecker aufnehmen kann, haben den Vorteil, dass zur Verbindung des Lenkrads bzw. der elektrischen Lenkradfunktionen mit der Wickelfeder an einer Lenksäule lediglich der Kontaktstecker 20 mit der Wickelfeder zu verbinden ist. Alle weiteren Verbindungen können vorab bereits mit der Kabelführungseinrichtung hergestellt werden. Dies führt zu einer erheblichen Erleichterung bei der Montage eines Lenkrads in einem Fahrzeug.

### Bezugszeichenliste

- 10: Kabelkanal
- 11: Haltemittel
- 12: Führungsabschnitt
- 12a: erster Führungsabschnitt
- 12b: zweiter Führungsabschnitt
- 12c: freies Ende
- 13: Verbindungsabschnitt
- 13a: erster Verbindungsabschnitt
- 13b: zweiter Verbindungsabschnitt
- 14: Schnapphaken
- 15: Kanalboden
- 16: Seitenwand
- 17: Ausnehmung
- 18: Plattenfortsatz
- 19: Bodenplatte
- 20: Kontaktstecker
- 21: Steckerkörper
- 22: Steckerdeckel
- 23: Hupenkontaktstecker
- 24: Gasgeneratorstecker
- 25: TAU-Stecker
- 26: Multifunktionsstecker
- 27: Klemmfederelement
- 30: Kabel
- 31: Modulverbindungskabel
- 32: Lenkradverbindungskabel

## Patentansprüche

1. Kabelführungseinrichtung für Anschlusskabel eines Gassackmoduls mit
wenigstens einem Kabelkanal (10), der Haltemittel (11) für wenigstens ein Kabel (30) aufweist, und mit
wenigstens einem Kontaktstecker (20) zur Verbindung mit einer Wickelfeder einer Lenksäule,
wobei der Kontaktstecker (20) verdrehsicher an den Kabelkanal (10) gekoppelt ist,
**dadurch gekennzeichnet, dass** sich der Kabelkanal (10) durch den Kontaktstecker (20) erstreckt, wobei der Kontaktstecker (20) einen Steckerdeckel (22) sowie einen Steckerkörper (21) aufweist und der Kabelkanal (10) zwischen dem Steckerdeckel (22) und dem Steckerkörper (21) angeordnet ist.

2. Kabelführungseinrichtung nach Anspruch 1, **dadurch gekennzeichnet, dass** der Kabelkanal (10) einen Führungsabschnitt (12) und einen Verbindungsabschnitt (13) aufweist, wobei der Kontaktstecker (20) mit dem Verbindungsabschnitt (13), insbesondere durch eine Rastverbindung oder Klemmverbindung, gekoppelt ist, und/oder wobei der Kabelkanal (10) mit dem Kontaktstecker (20) mittels eines damit jeweils dauerhaft adhäsiv koppelbaren Zwischenelementes, insbesondere mittels eines doppelseitigen Klebebands verbunden ist.

3. Kabelführungseinrichtung nach Anspruch 1 oder 2, **dadurch gekennzeichnet, dass** der Kabelkanal (10), insbesondere der Verbindungsabschnitt (13), Schnapphaken (14) oder Klipsverbinder zur Verbindung mit dem Kontaktstecker (20) aufweist.

4. Kabelführungseinrichtung nach einem der vorhergehenden Ansprüche, **dadurch gekennzeichnet, dass** ein Verbindungsabschnitt (13) des Kabelkanals (10) zwischen dem Steckerdeckel (22) und dem Steckerkörper (21), insbesondere klemmend angeordnet ist.

5. Kabelführungseinrichtung nach einem der vorhergehenden Ansprüche, **dadurch gekennzeichnet, dass** der Kabelkanal (10) einen ersten Führungsabschnitt (12a) zur Führung von Anschlusskabeln des Gassackmoduls, einen zweiten Führungsabschnitt (12b) zur Führung von Anschlusskabeln eines Lenkrads und einen Verbindungsabschnitt (13, 13a) aufweist, der zwischen den beiden Führungsabschnitten (12a, 12b) angeordnet ist.

6. Kabelführungseinrichtung nach einem der vorhergehenden Ansprüche, **dadurch gekennzeichnet, dass** der Kabelkanal (10), insbesondere der Verbindungsabschnitt (13), eine Bodenplatte (19) mit einer Breite aufweist, die kleiner als die Breite des Kontaktsteckers (20), insbesondere des Steckerdeckels (22) und/oder des Steckerkörpers (21), ist, und/oder, dass der Kontaktstecker (20) und/oder der Verbindungsabschnitt (13) an einem Längsende oder zwischen Längsenden des Kabelkanals (10) angeordnet ist, und/oder, dass der Kabelkanal (10) einstückig, insbesondere als Kunststoff-Spritzgussteil, ausgebildet ist.

7. Verkabelung eines Gassackmoduls mit einer Kabelführungseinrichtung nach einem der vorhergehenden Ansprüche und einem oder mehreren elektrisch leitenden Kabeln (30), die in der Kabelführungseinrichtung angeordnet, insbesondere durch die Haltemittel (11) formschlüssig fixiert, sind.

8. Verkabelung nach Anspruch 7, **dadurch gekennzeichnet, dass** die Kabel (30) Modulverbindungskabel (31), insbesondere wenigstens ein Auslösekabel für wenigstens einen pyrotechnischen Aktuator und/oder wenigstens ein Hupenkontaktkabel (23), und/oder Lenkradverbindungskabel (32), insbesondere wenigstens ein Multifunktionsschalterkabel (26) und/oder wenigstens ein Beleuchtungskabel, umfassen, wobei, vorzugsweise, die Lenkradverbindungskabel (32) in dem Kontaktstecker (20) oder in einem separaten Lenkradverbindungsstecker enden, und/oder wobei, vorzugsweise, der Lenkradverbindungsstecker durch einen Führungsabschnitt (12) des Kabelkanals (10) mit dem Kontaktstecker (20) verbunden ist.

9. Gassackmodul mit einer Kabelführungseinrichtung nach einem der Ansprüche 1 bis 6 und/oder einer Verkabelung nach Anspruch 7 oder 8.

10. Gassackmodul nach Anspruch 9, **dadurch gekennzeichnet, dass** die Kabelführungseinrichtung alle oder einen ersten Teil der Anschlusskabel (30) des Gassackmoduls und des Lenkrads bündelt, wobei ein zweiter Teil der Anschlusskabel (30) lose angeordnet oder in einer separaten Kabelführung gebündelt ist.

11. Lenkrad oder Fahrzeug mit einer Kabelführungseinrichtung nach einem der Ansprüche 1 bis 6 und/oder einer Verkabelung nach Anspruch 7 oder 8 und/oder einem Gassackmodul nach Anspruch 9 oder 10.

## Claims

1. A cable conduit device for connection cables of an airbag module comprising
at least one cable duct (10) including holding means (11) for at least one cable (30), and comprising
at least one contact plug (20) for connection to a coil spring of a steering column,
wherein the contact plug (20) is non-rotatably coupled to the cable duct (10),
**characterized in that** the cable duct (10) extends through the contact plug (20), the contact plug (20) having a plug cover (22) as well as a plug body (21) and the cable duct (10) being disposed between the plug cover (22) and the plug body (21).

2. The cable conduit device according to claim 1, **characterized in that** the cable duct (10) includes a conduit portion (12) and a connecting portion (13), wherein the contact plug (20) is coupled to the connecting portion (13), especially by a snap-on connection or clamping connection, and/or wherein the cable duct (10) is connected to the contact plug (20) by means of an intermediate member adapted to be permanently adhesively coupled thereto, especially by means of a double-sided adhesive tape.

3. The cable conduit device according to claim 1 or 2, **characterized in that** the cable duct (10), especially the connecting portion (13), includes snap hooks (14) or clip connectors for connection to the contact plug (20).

4. The cable conduit device according to any one of the preceding claims, **characterized in that** a connecting portion (13) of the cable duct (10) is disposed, especially by clamping, between the plug cover (22) and the plug body (21).

5. The cable conduit device according to any one of the preceding claims, **characterized in that** the cable duct (10) has a first guiding portion (12a) for guiding connection cables of the airbag module, a second guiding portion (12b) for guiding connection cables of a steering wheel and a connecting portion (13, 13a) which is disposed between said two guiding portions (12a, 12b).

6. The cable conduit device according to any one of the preceding claims, **characterized in that** the cable duct (10), especially the connecting portion (13), includes a bottom plate (19) having a width that is smaller than the width of the contact plug (20), especially of the plug cover (22) and/or of the plug body (21), and/or **in that** the contact plug (20) and/or the connecting portion (13) is/are arranged at a longitudinal end or between longitudinal ends of the cable duct (10), and/or **in that** the cable duct (10) is formed in one piece, especially as a plastic injection-molded part.

7. A cabling of an airbag module comprising a cable conduit device according to any one of the preceding claims and comprising one or more electrically conducting cables (30) which are arranged, especially positively fixed by the holding means (11), within the cable conduit device.

8. The cabling according to claim 7, **characterized in that** the cables (30) comprise module connection cables (31), especially at least one trigger cable for at least one pyrotechnical actuator and/or at least one horn contact cable (23), and/or steering wheel connection cables (32), especially at least one multi-function switch cable (26) and/or at least one lighting cable, wherein the steering wheel connection cables (32) preferably end in the contact plug (20) or in a separate steering wheel connection plug, and/or wherein the steering wheel connection plug is preferably connected to the contact plug (20) by a guiding portion (12) of the cable duct (10).

9. An airbag module comprising a cable conduit device according to any one of the claims 1 to 6 and/or a cabling according to claim 7 or 8.

10. The airbag module according to claim 9, **characterized in that** the cable conduit device bundles all or a first part of the connection cables (30) of the airbag module and of the steering wheel, wherein a second part of the connection cables (30) is loosely arranged or is bundled in a separate cable conduit.

11. A steering wheel or a vehicle comprising a cable conduit device according to any one of the claims 1 to 6, and/or a cabling according to claim 7 or 8 and/or an airbag module according to claim 9 or 10.

## Revendications

1. Dispositif de guidage de faisceau électrique pour les câbles de connexion d'un module airbag avec au moins un chemin de câble (10) qui a un dispositif de maintien (11) pour au moins un câble (30) et avec
au moins un connecteur (20) pour une connexion avec un ressort spirale d'une colonne de direction,
pour lequel le connecteur (20) est couplé en rotation au chemin de câble (10),
**caractérisé en ce que** le chemin de câble (10) s'étend à travers le connecteur (20), pour lequel le connecteur (20) présente un couvre-prise (22) ainsi qu'un corps de prise (21) et que le chemin de câble (10) est disposé entre le couvre-prise (22) et le corps de prise (21).

2. Dispositif de guidage de faisceau électrique selon la revendication 1, **caractérisé en ce que** le chemin de câble (10) présente une section de guidage (12) et une section de connexion (13), pour lequel le connecteur (20) est couplé avec la section de connexion (13), en particulier par un liaison clipsable ou une liaison par serrage, et/ou pour lequel le chemin de câble (10) est connecté au connecteur (20) au moyen d'un élément intermédiaire adhésif permanent, en particulier au moyen d'un ruban adhésif à double face.

3. Dispositif de guidage de faisceau électrique selon la revendication 1 ou 2, **caractérisé en ce que** le chemin de câble (10), en particulier la section de connexion (13), présente des crochets d'encliquetage (14) ou des clips pour la connexion au connecteur (20).

4. Dispositif de guidage de faisceau électrique selon l'une des revendications précédentes, caractérisé en qu'une section de connexion (13) du chemin de câble (10) est disposée entre le couvre-prise (22) et le corps de prise (21), en particulier montée serrée.

5. Dispositif de guidage de faisceau électrique selon l'une des revendications précédentes, **caractérisé en ce que** le chemin de câble (10) présente une première section de guidage (12a) pour le guidage des câbles de raccordement du module airbag, une deuxième section de guidage (12b) pour le guidage de câbles d'un volant et une section de connexion (13, 13a), laquelle est disposée entre les deux sections de guidage (12a, 12b).

6. Dispositif de guidage du faisceau électrique selon l'une des revendications précédentes, **caractérisé en ce que** le chemin de câble (10), en particulier la section de connexion (13), a une base (19) avec une largeur, qui est inférieure à la largeur du connecteur (20), en particulier du couvre-prise (22) et/ou du corps de prise (21), et/ou que le connecteur (20) et/ou la section de connexion (13) est disposé à une extrémité longitudinale ou entre les extrémités longitudinales du chemin de câble (10), et/ou que le chemin de câble (10) est réalisé en une seule pièce, en particulier en une partie moulée par injection de plastique.

7. Faisceau électrique d'un module airbag muni d'un dispositif de guidage du faisceau électrique selon l'une des revendications précédentes et d'un ou de plusieurs câbles électriques (30), qui sont disposés dans le dispositif de guidage du faisceau électrique, en particulier sont bloqués par les moyens de maintien (11).

8. Faisceau électrique selon la revendication 7, **caractérisé en ce que** le faisceau électrique (30) comprend un faisceau de raccordement du module (31), en particulier au moins un câble de déclenchement pour au moins un actionneur pyrotechnique et/ou au moins un câble de contact de klaxon (23), et/ou un câble de connexion du volant (32), en particulier au moins un câble de commutateur multifonctions (26) et/ou au moins un câble d'éclairage, pour lequel, de préférence, les câbles de raccordement du volant (32) se terminent dans le connecteur (20) ou dans un connecteur de connexion du volant séparé, et/ou pour lequel, de préférence, le connecteur de connexion du volant est relié au connecteur (20) par une section de guidage (12) du chemin du câble (10).

9. Module airbag avec un dispositif de guidage de faisceau électrique selon l'une quelconque des revendications 1 à 6 et/ou un faisceau électrique selon la revendication 7 ou 8.

10. Module airbag selon la revendication 9, **caractérisé en ce que** le dispositif de guidage du faisceau électrique regroupe tout ou une première partie des câbles de raccordement (30) du module airbag et du volant, pour lequel une deuxième partie des câbles de raccordement (30) est disposée libre ou est groupée dans un chemin de câble séparé.

11. Volant ou véhicule avec un dispositif de guidage de faisceau électrique selon l'une quelconque des revendications 1 à 6 et/ou un faisceau électrique selon la réclamation 7 ou 8 et/ou un module airbag selon la réclamation 9 ou 10.
